Europäisches Patentamt

European Patent Office

Office européen des brevets

(19)

(11) Veröffentlichungsnummer: **0 166 345**
**B1**

## (12) EUROPÄISCHE PATENTSCHRIFT

(45) Veröffentlichungstag der Patentschrift:
**14.09.88**

(21) Anmeldenummer: **85107451.8**

(22) Anmeldetag: **14.06.85**

(51) Int. Cl.⁴: **B 60 T 8/28**

(54) Druckregler für hydraulische Fahrzeugbremsanlagen.

(30) Priorität: **19.06.84 DE 8418527 U**

(43) Veröffentlichungstag der Anmeldung:
**02.01.86 Patentblatt 86/1**

(45) Bekanntmachung des Hinweises auf die Patenterteilung:
**14.09.88 Patentblatt 88/37**

(84) Benannte Vertragsstaaten:
**DE FR GB IT SE**

(56) Entgegenhaltungen:
**DE - A - 3 021 952**
**DE - A - 3 243 053**

(73) Patentinhaber: **LUCAS INDUSTRIES public limited company, Great King Street, Birmingham, B19 2XF West Midlands (GB)**

(72) Erfinder: **Kaub, Manfred, Im Zillgen 16, D-5401 Rhens (DE)**

(74) Vertreter: **Wuesthoff, Franz, Dr.-Ing. et al, Patentanwälte Wuesthoff -v. Pechmann-Behrens-Goetz Schweigerstrasse 2, D-8000 München 90 (DE)**

## Beschreibung

Die Erfindung betrifft einen Druckregler für hydraulische Fahrzeug-Bremsanlagen mit
- einem Gehäuse, das einen Einlass und eine damit verbundene Ventilkammer sowie einen Auslass aufweist,
- einem Ventilsitz, der in der Ventilkammer am Eingang eines Kanals zum Auslass angeordnet ist, und
- einem Ventilkörper, der in der Ventilkammer von Bremsflüssigkeit umströmbar angeordnet und verzögerungsabhängig aus einer Ruhestellung gegen den Ventilsitz bewegbar ist.

Bei einem aus der DE-C 1 780 644 bekannten Druckregler dieser Gattung ist die Ventilkammer nach hinten, zum Einlass hin, durch eine Zwischenwand begrenzt, welche die Ruhestellung des von einer Kugel gebildeten Ventilkörpers festlegt. Die Zwischenwand trennt die Ventilkammer von einer Vorkammer, die mit dem Einlass über einen verengten axialen Durchlass verbunden ist. In der Mitte der Zwischenwand ist ein düsenartiges Loch ausgebildet, durch das hindurch Bremsflüssigkeit bei einer kräftigen Bremsbetätigung in Form eines Strahls gegen den Ventilkörper strömt und diesem einen Impuls in Richtung zum Ventilsitz hin erteilt. Auf diese Weise wird dafür gesorgt, dass der Ventilkörper bei einer plötzlichen und besonders kräftigen Bremsbetätigung den Kanal zum Auslass rasch versperrt und dadurch verhindert, dass an den Auslass angeschlossene Hinterradbremsen blockieren. Bei einer sanften und allmählichen Bremsbetätigung erreicht der Ventilkörper den Ventilsitz dagegen erst dann, wenn die Verzögerung des Fahrzeugs, in das der Druckregler eingebaut ist, einen bestimmten Wert überschritten hat. Der Ventilkammer und dem von ihr zum Auslass führenden Kanal ist eine Stufenbohrung parallel geschaltet, in der ein Stufenkolben derart angeordnet ist, dass er mit seiner kleineren Stirnfläche den Druck am Einlass und mit seiner grösseren Stirnfläche den Druck am Auslass ausgesetzt ist und infolgedessen nach dem Schliessen des Ventils gegenüber einem weiteren Druckanstieg einen am Einlass verminderten Druckanstieg am Auslass bewirkt.

Aus der DE-C 2 213 463 ist ein anderer Druckregler der eingangs beschriebenen Gattung bekannt, bei dem der von der Ventilkammer zum Auslass führende Kanal in einem Stufenkolben angeordnet ist, dessen kleinere Stirnfläche die Ventilkammer begrenzt und den Ventilsitz trägt. Auch bei diesem bekannten Druckregler legt sich der von einer Kugel ausgebildete Ventilkörper bei einer bestimmten Fahrzeugverzögerung gegen den Ventilsitz und versperrt den zum Auslass führenden Kanal. Bei weiterem Druckanstieg am Einlass und in der Ventilkammer verschiebt sich der Stufenkolben nach vorne in eine Stellung, in die ihr der Ventilkörper nicht folgen kann, da er von einem ringförmigen Anschlag im Gehäuse an einer weiteren Vorwärtsbewegung gehindert ist. Infolgedessen strömt weitere Bremsflüssigkeit durch den Kanal im Stufenkolben hindurch zum Auslass und bewirkt dort einen weiteren Druckanstieg, der den Stufenkolben wieder nach hinten bewegt, so dass der Ventilsitz den Ventilkörper wieder berührt. Diese hin- und hergehenden Bewegungen des Stufenkolbens wiederholen sich bei weiterem Druckanstieg mit der Folge, dass der Druck am Auslass nach dem ersten Schliessen des Ventils ähnlich wie bei dem zuerst beschriebenen bekannten Druckregler weniger steil ansteigt als der Druck am Einlass.

Bei diesen beiden und weiteren bekannten Druckreglern dieser Gattung besteht die Möglichkeit, dass sich beispielsweise nach einem Austausch der Bremsflüssigkeit eine Luftblase im höchstgelegenen Bereich der Ventilkammer oberhalb und vor dem Ventilsatz bildet. Es wäre kostspielig, an dieser Stelle eine Entlüftungsschraube anzuordnen, und bei den üblichen Einbauverhältnissen wäre eine solche Entlüftungsschraube auch schwer zu erreichen. Es ist deshalb wünschenswert, eine Bremsanlage, die einen oder mehrere Druckregler der beschriebenen Gattung enthält, an anderer, möglichst zentraler und gut zugänglicher Stelle zu entlüften. Voraussetzung dafür ist, Luftblasen aus der Ventilkammer zum Auslass hin zu vertreiben, von wo sie dann bei geeigneter Leitungsführung ohne weiteres zur zentralen Entlüftungsstelle gelangen. Dies muss aus Sicherheitsgründen bei stillstehendem Fahrzeug, also ohne Mitwirkung von Verzögerungskräften geschehen.

Bei dem aus der DE-C 1 780 644 bekannten Druckregler lässt sich zwar mit einer heftigen Bremsbetätigung ein gegen den Ventilkörper gerichteter Flüssigkeitsstrahl erzeugen, der imstande ist, den Ventilkörper nach vorne in eine Stellung zu bewegen, in der er den von einer Luftblase eingenommenen Raum verengt; der Flüssigkeitsstrahl genügt jedoch nicht, um zwischen Ventilkörper und Ventilsitz eine Strömung entstehen zu lassen, die kräftig genug wäre, um die Luftblase mitzureissen. Bei dem aus der DE-C 2 213 463 bekannten Druckregler kann zwar durch eine kräftige Bremsbetätigung bei geöffneter Entlüftungsschraube an einer angeschlossenen Hinterradbremse eine grosse Menge Bremsflüssigkeit je Zeiteinheit in die Ventilkammer gefördert werden, da diese unmittelbar an den Einlass angeschlossen ist. Der Ventilkörper lässt sich jedoch bei stillstehendem Fahrzeug nicht nach vorne bewegen und ist deshalb nicht imstande, rings um den Ventilsitz einen Ringraum zu begrenzen, der eng genug wäre, um eine Strömungsgeschwindigkeit entstehen zu lassen, bei der die Luft mitgerissen wird.

Der Erfindung liegt deshalb die Aufgabe zugrunde, einen Druckregler der eingangs beschriebenen Gattung derart zu gestalten, dass eine in seiner Ventilkammer hängengebliebene Luftblase auf einfache Weise und vor allem ohne äusseren Eingriff am Druckregler selbst beseitigt werden kann.

Die Aufgabe ist erfindungsgemäss dadurch gelöst, dass zwischen Einlass und Ventilkörper ein Staukörper angeordnet ist, der von Bremsflüssigkeit um- oder durchströmbar und strömungsabhängig aus einer vom Ventilkörper entfernten Ruhestellung bis zum Aufprall auf den Ventilkörper zumindest annähernd in dessen Bewegungsrichtung bewegbar ist.

Wenn man zum Entlüften von Fahrzeugbremsanlagen übliche Bedingungen herstellt, beispielsweise durch Öffnen von Entlüftungsschrauben an den Radbremszylindern, und dann das Bremspedal plötzlich betätigt, dann strömt ein grosses Volumen Bremsflüssigkeit je Zeiteinheit durch den Einlass und staut sich an dem erfindungsgemässen Staukörper, der sich infolge seiner trägen Masse der Strömung zunächst widersetzt, dann aber beschleunigt wird und gegen den Ventilkörper prallt, so dass dieser nach vorne, in Richtung zum Ventilsitz bewegt wird. Die bei der Vorwärtsbewegung des Staukörpers in die Ventilkammer eintretende grosse Menge Bremsflüssigkeit findet nun für ihre weitere Strömung zum Auslass hin einen durch den Ventilkörper stark verengten Ringraum rings um den Ventilsitz vor und erreicht in diesem Ringraum eine entsprechend grosse Strömungsgeschwindigkeit, bei der die Luft zum Ventilsitz hin und durch diesen sowie den anschliessenden Kanal hindurch zum Auslass mitgerissen wird. Wenn der Ventilsitz ortsfest angeordnet ist, können mehrere Pumpbewegungen mit dem Bremspedal erforderlich sein, bis die Luft vollständig aus der Ventilkammer entwichen ist; wenn der Ventilsitz hingegen an einem Stufenkolben angeordnet ist, kann sich dieser so einstellen, dass eine vollständige Entlüftung schon bei einer einzigen Bremsbetätigung möglich ist.

Die Erfindung wird vorzugsweise bei einem Druckregler angewandt, bei dem gemäss der DE-C 1 780 644 oder, um ein weiteres Beispiel zu nennen, gemäss der DE-A 3 243 053 die Ruhestellung des Ventilkörpers durch eine Zwischenwand festgelegt ist, die eine Vorkammer zwischen Einlass und Ventilkammer begrenzt und ein mittiges Loch hat. In diesem Fall wird die Erfindung vorzugsweise dadurch weitergebildet, dass der Staukörper in der Vorkammer angeordnet ist und einen Stössel aufweist, der durch das mittige Loch hindurch gegen den Ventilkörper bewegbar ist.

Dabei kann, wie bei den beiden zuletzt erwähnten bekannten Druckreglern, zwischen Einlass und Vorkammer ein verengter axialer Durchlass angeordnet sein. Für diesen Fall besteht eine vorteilhafte Weiterbildung der Erfindung darin, dass der Stössel sich auch in Richtung zum Einlass erstreckt, und in der Ruhestellung des Staukörpers stopfenartig in den Durchlass hineinragt. Damit lässt sich eine besonders starke, nahezu geschossartige Beschleunigung des Staukörpers erzielen.

Es ist nicht unbedingt erwünscht, dass der erfindungsgemässe Staukörper auch bei Bremsungen im Betrieb, bei entlüfteter und auch im übrigen intakter Bremsanlage einen Einfluss im Sinne einer Beschleunigung auf den Ventilkörper ausübt. Deshalb ist der erfindungsgemässe Druckregler vorzugsweise derart gestaltet, dass der Weg des Staukörpers aus seiner Ruhestellung bis zum Aufprall auf den Ventilkörper grösser ist als der Quotient aus dem konstruktiv vorgesehenen Volumen der bei Bremsbetätigung durch den Einlass einströmenden Bremsflüssigkeit und der Querschnittsfläche des Staukörpers. Durch diese Gestaltung wird dafür gesorgt, dass der Staukörper den Ventilkörper nur dann erreichen und ihm einen Impuls nach vorne erteilen kann, wenn die Bremse unter Bedingungen betätigt wird, wie sie, insbesondere durch Öffnen von Entlüftungsschrauben zum Entlüften üblicherweise hergestellt werden, also unter Bedingungen, bei denen der Druckregler von einem Bremsflüssigkeitsvolumen durchströmt wird, das erheblich grösser ist als das grösste bei einer Betriebsbremsung durch den Druckregler strömende Volumen.

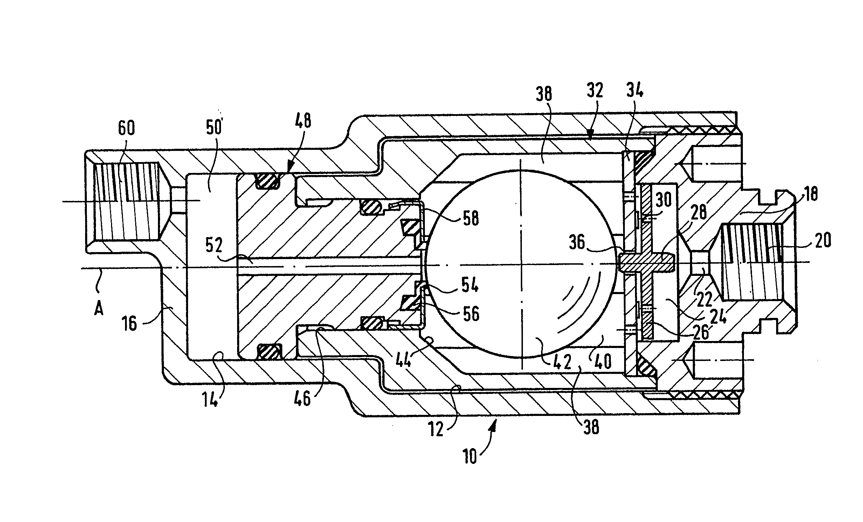

Ein Ausführungsbeispiel der Erfindung wird im folgenden anhand einer schematischen Zeichnung mit weiteren Einzelheiten beschrieben. In der Zeichnung ist ein Axialschnitt durch ein Druckregelventil in Ruhestellung dargestellt.

Das dargestellte Druckregelventil hat ein im wesentlichen rotationssymmetrisches, abgestuft zylindrisches Gehäuse 10, das in ein Fahrzeug so eingebaut wird, dass seine Achse A parallel zur Längsmittelebene des Fahrzeugs angeordnet ist und nach vorne ansteigt. Das Gehäuse 10 hat einen hinteren Bohrungsabschnitt 12 von grösserem Durchmesser und einen vorderen Bohrungsabschnitt 14 von kleinerem Durchmesser sowie eine vordere Stirnwand 16. Hinten ist das Gehäuse durch einen eingeschraubten Stopfen 18 abgeschlossen.

Der Stopfen 18 weist einen axial angeordneten Einlass 20 auf, über den sich das Druckregelventil an einen Hauptzylinder einer Fahrzeugbremsanlage anschliessen lässt. Der Einlass 20 ist über einen Durchlass 22 geringeren Durchmessers mit einer ebenfalls im Stopfen 18 ausgebildeten, zylindrischen Vorkammer 24 verbunden, die einen Staukörper 26 enthält. Der Staukörper 26 hat einen nach vorne und hinten wegragenden axialen Stössel 28, weist rings um diesen mehrere kleine Bohrungen 30 auf und ist mit geringem radialem Spiel in der Vorkammer 24 geführt, so dass er axial hin- und herbeweglich ist.

Durch den Stopfen 18 ist im Gehäuse 10 ein abgestuft zylindrischer Einsatz 32 und in diesem eine Zwischenwand 34 festgehalten. Die Zwischenwand 34 hat mehrere Löcher, von denen ein Loch 36 mittig angeordnet ist und einen etwas grösseren Durchmesser aufweist als der Stössel 28.

Innerhalb des Einsatzes 32 ist zwischen achsparallel angeordneten Rippen 38 eine Ventilkammer 40 ausgebildet, die einen kugelförmigen Ventilkörper 42 aufnimmt und nach vorne durch einen ringförmigen, konischen Absatz 44 begrenzt ist. An den Absatz 44 schliesst sich eine axiale Zylinderbohrung 46 im vorderen Teil des Einsatzes 32 an. Der Durchmesser der Zylinderbohrung 46 ist kleiner als der Durchmesser des vorderen Bohrungsabschnittes 14. In der Zylinderbohrung 46 sowie im vorderen Bohrungsabschnitt 14 sind entsprechende Abschnitte eines Stufenkolbens 48 geführt, der mit seiner kleineren, hinteren Stirnfläche die Ventilkammer 40 und mit seiner grösseren, vorderen Stirnfläche innerhalb des vorderen Bohrungsabschnittes 14 eine Auslasskammer 50 begrenzt.

Durch den Stufenkolben 48 hindurch erstreckt sich als Verbindung zwischen der Ventilkammer 40 und der Auslasskammer 50 ein axialer Kanal 52, dessen der Ventilkammer 40 zugewandtes Ende von einem Ventilsitz 54 umgeben ist. Der Ventilsitz 54 ist an einem ringförmigen Elastomerkörper 56 ausgebildet, der mit einer Blechkappe 58 am hinteren Ende des Stufenkolbens 48 festgehalten ist.

Die vordere Stirnwand 16 des Gehäuses 10 weist einen achsparallel nach oben versetzten Auslass 60 auf, über den die Auslasskammer 50 im Einbauzustand mit einem Zylinder einer oder mehrerer Radbremsen eines Fahrzeugs verbunden ist. Dabei handelt es sich im allgemeinen ausschliesslich um Hinterradbremsen; die Vorderradbremsen des Fahrzeugs werden vom Hauptzylinder unmittelbar mit Bremsflüssigkeit versorgt.

Bei einer Betriebsbremsung, auch wenn es sich um eine plötzliche handelt, ist die durch den Einlass 20 einströmende Flüssigkeitsmenge im Höchstfall gross genug, um den Staukörper 26 soweit nach vorne zu bewegen, dass das vordere Ende seines Stössels 28 geringfügig in das Loch 36 eindringt, ohne den Ventilkörper 42 zu erreichen. Wenn das Volumen der einströmenden Bremsflüssigkeit jedoch aussergewöhnlich gross ist, prallt der Stössel 28 mit einer der Heftigkeit der Bremsbetätigung entsprechenden Wucht gegen den Ventilkörper 42 und bewegt diesen nach vorne. Ein hierfür ausreichender Volumenstrom lässt sich durch eine Bremsbetätigung dann erzielen, wenn eine dem Druckregler nachgeschaltete Entlüftungsstelle geöffnet worden ist. Ein noch grösserer Volumenstrom kann dann entstehen, wenn in einem dem Druckregler nachgeordneten Bereich einer Bremsanlage eine Leitung gebrochen ist oder eine Bremse infolge unterbliebener Nachstellung eine ungewöhnlich grosse Menge Bremsflüssigkeit aufnimmt. In solchen Fällen ist es erwünscht, dass der Staukörper 26 dem Ventilkörper 42 einen genügend grossen Impuls nach vorne erteilt, um das Ventil vorübergehend ganz zu schliessen mit der Folge, dass ein grösserer Anteil der vom Hauptbremszylinder zur Verfügung gestellten Bremsflüssigkeit zu Bremsen, insbesondere Vorderradbremsen gelangt, die nicht dem Druckregler nachgeschaltet sind.

## Patentansprüche

1. Druckregler für hydraulische Fahrzeugbremsanlagen mit
- einem Gehäuse (10), das einen Einlass (20) und eine damit verbundene Ventilkammer (40) sowie einen Auslass (60) aufweist,
- einem Ventilsitz (54), der in der Ventilkammer (40) am Eingang eines Kanals (52) zum Auslass (60) angeordnet ist, und
- einem Ventilkörper (42), der in der Ventilkammer (40) von Bremsflüssigkeit umströmbar angeordnet und verzögerungsabhängig aus einer Ruhestellung gegen den Ventilsitz (54) bewegbar ist, dadurch gekennzeichnet, dass zwischen Einlass (20) und Ventilkörper (42) ein Staukörper (26) angeordnet ist, der von Bremsflüssigkeit um- oder durchströmbar und strömungsabhängig aus einer vom Ventilkörper (42) entfernten Ruhestellung bis zum Aufprall auf den Ventilkörper (42) zumindest annähernd in dessen Bewegungsrichtung bewegbar ist.

2. Druckregler nach Anspruch 1, bei dem die Ruhestellung des Ventilkörpers (42) durch eine Zwischenwand (34) festgelegt ist, die eine Vorkammer (24) zwischen Einlass (20) und Ventilkammer (40) begrenzt und ein mittiges Loch (36) hat, dadurch gekennzeichnet, dass der Staukörper (26) in der Vorkammer (24) angeordnet ist und einen Stössel (28) aufweist, der durch das mittige Loch (36) hindurch gegen den Ventilkörper (42) bewegbar ist.

3. Druckregler nach Anspruch 2, bei dem zwischen Einlass (20) und Vorkammer (24) ein verengter axialer Durchlass (22) angeordnet ist, dadurch gekennzeichnet, dass der Stössel (28) sich auch in Richtung zum Einlass (20) erstreckt und in der Ruhestellung des Staukörpers (26) stopfenartig in den Durchlass (22) hineinragt.

4. Druckregler nach einem der Ansprüche 1 bis 3, dadurch gekennzeichnet, dass der Weg des Staukörpers (26) aus seiner Ruhestellung bis zum Aufprall auf den Ventilkörper (42) grösser ist als der Quotient aus dem konstruktiv vorgesehenen Volumen der bei Bremsbetätigung durch den Einlass (20) einströmenden Bremsflüssigkeit und der Querschnittsfläche des Staukörpers (26).

## Claims

1. A pressure regulator for hydraulic vehicle brake installations, comprising
- a casing (10) which has an outlet (20) and a valve chamber (40) connected to the same as well as an outlet (60),
- a valve seat (54) which is arranged in the valve chamber (40) at the entrance of a passage (52) to the outlet (60), and
- a valve member (42) which is arranged in the valve chamber (40) so that brake fluid can flow around it and which is movable in response to deceleration from an inoperative position against the valve seat (54), characterized in that between the inlet (20) and the valve member (42) a barrier member (26) is arranged around or through which brake fluid can flow and which is movable in response to the flow from an inoperative position remote from the valve member (42) at least approximately in the direction of movement thereof until it strikes the valve member (42).

2. A pressure regulator according to claim 1 wherein the inoperative position of the valve member (42) is fixed by a partition (34) defining an antechamber (24) between the inlet (20) and the valve chamber (40) and having a central aperture (36), characterized in that the barrier member (26) is disposed in the antechamber (24) and comprises a stem (28) which is movable through the central aperture (36) against the valve member (42).

3. A pressure regulator according to claim 2, wherein a constricted axial passage (22) is disposed between the inlet (20) and the antechamber (24), characterized in that the stem (28) also extends in the direction of the inlet (20) and projects like a plug into the passage (22) when the barrier member (26) is in the inoperative position.

4. A pressure regulator according to any one of claims 1 to 3, characterized in that the path of the barrier member (26) from its inoperative position until it strikes the valve member (42) is greater than the quotient of the design volume of the brake fluid entering through the inlet (20) on brake actuation and the cross-sectional area of the barrier member (26).

**Revendications**

1. Régulateur de pression pour installations hydrauliques de freinage de véhicules comportant:
– un carter (10), qui est pourvu d'une entrée (20) et d'une chambre de valve (40) reliée à celle-ci ainsi que d'une sortie (60),
– un siège de valve (54), qui est disposé dans la chambre de valve (40) à l'entrée d'un canal (52) aboutissant à la sortie (60), et
– un corps de valve (42), qui est disposé dans la chambre de valve (40) en étant contournable par l'écoulement de liquide de frein et qui est déplaçable, en fonction d'un ralentissement, depuis une position de repos jusque contre le siège de valve (54), caractérisé en ce qu'il est prévu entre l'entrée (20) et le corps de valve (42) un corps de retenue (26), qui peut être contourné ou traversé par du liquide de frein et qui est déplaçable depuis une position de repos éloignée du corps de valve (42), jusqu'à un impact sur le corps de valve (42) au moins approximativement dans sa direction de déplacement de celui-ci.

2. Régulateur de pression selon la revendication 1, dans lequel la position de repos du corps de valve (42) est établie par une paroi intermédiaire (34), qui délimite une pré-chambre (24) entre l'entrée (20) et la chambre de valve (40) et qui comporte un trou central (36), caractérisé en ce que le corps de retenue (26) est disposé dans la pré-chambre (24) et comporte un poussoir (28) qui est déplaçable à travers le trou central (36) jusque contre le corps de valve (42).

3. Régulateur de pression selon la revendication 2, dans lequel il est prévu entre l'entrée (20) et la préchambre (24) un passage axial étranglé (22), caractérisé en ce que le poussoir (28) s'étend également en direction de l'entrée (20) et, dans la position de repos du corps de retenue (26), pénètre à la façon d'un tampon dans le passage (22).

4. Régulateur de pression selon une des revendications 1 à 3, caractérisé en ce que la course du corps de retenue (26) depuis sa position de repos jusqu'au contact du corps de valve (42) est supérieure au quotient du volume, prévu à la construction, du liquide de frein pénétrant par l'entrée (20) lors d'un actionnement du frein et de la surface de section du corps de retenue (26).